# FASCICULE DE BREVET EUROPEEN

(11) **EP 0 616 018 B1**
(45) Date de publication et mention de la délivrance du brevet: **25.06.1997**
(21) Numéro de dépôt: 94420075.7
(22) Date de dépôt: 07.03.1994
(51) Int. Cl.: C09J 153/02

(54) **Adhésif pulvérisable à base de blocs copolymères styréniques linéaires hydrogénés**
Sprühbarer Klebstoff aus hydrierten linearen Styrolblockcopolymeren
Sprayable adhesive based on hydrogenated linear styrene block copolymers

(30) Priorité: 19.03.1993 FR 9303340
(43) Date de publication de la demande: 21.09.1994
(73) Titulaire: Nguyen, Van Tao, F-74350 Copponex (FR)
(72) Inventeur: Nguyen, Van Tao, F-74350 Copponex (FR)

(56) Documents cités:
- EP-A- 0 410 011
- WO-A-90/00065
- US-A- 4 745 139
- US-A- 4 833 193

## Description

L'invention concerne la composition de l'adhésif en solution à base de blocs copolymères styréniques linéaires hydrogénés, pulvérisable par pistolet à air comprimé et par aérosol permettant de fabriquer et d'utiliser des adhésifs qui forment un brouillard de particules fines adhérentes et sans filament pendant leur décharge à travers l'orifice d'un système de pulvérisation même avec des concentrations élevées de liant. Les adhésifs selon l'invention sont particulièrement destinés à fabriquer des adhésifs repositionnables, de fixations définitives ou temporaires utilisés dans les industries des arts graphiques, du textile, du cuir et dans les activités de bureau, de décoration et de bricolage.

Les adhésifs comme les mastics et les vernis sont formulables avec des blocs copolymères styréniques. Pour obtenir les propriétés spécifiques, les blocs copolymères styréniques sont mélangés avec des résines tackifiantes plastifiantes et des résines renforçantes. Avec leur structure de blocs chimiquement liés, ils permettent de formuler plus facilement des adhésifs que les copolymères classiques comme Acrylique, Chloloprène, CopolyVinylAcétate-Ethylène, Polyalphaoléfines amorphes et Caoutchouc Styrène Butadiène. Voir les brochures SHELL Chimie KR.G.2.1.(F), TR 5.1 (F) et TR 5.2.1.(G). On peut résumer la technique de base de formulation des adhésifs comme la suivante :
- Pour formuler un adhésif autocollant à la température ambiante, on ajoute dans les blocs copolymères styréniques un mélange de tackifiants et d'huiles plastifiantes.
- Pour formuler un adhésif de contact on utilise un mélange de tackifiants solides et de résines renforçantes.
- Les adhésifs thermofusibles nécessitent une bonne résistance à la chaleur, pendant la fabrication et l'application. Pour éviter une forte concentration d'agent antiUV, d'agent antioxydant, on peut utiliser les blocs copolymères styréniques hydrogénés et parfois fonctionnalisés.
- Pour formuler des adhésifs en solution, les blocs copolymères styréniques insaturés bon marché sont couramment utilisés car leur coût de fabrication est comparable à ceux de Chloroprène, de CopolyvinylAcétate-Ethylène et de Caoutchouc Styrène Butadiène. Par mesure de précaution, on ajoute une faible quantité d'antioxydant et d'antiUV.

Les adhésifs peuvent être appliqués sur le support à coller par la technique thermofusible et par celle en solution. Cependant la seconde technique sous forme de pistolet à air comprimé et d'aérosol n'a pu être développée à cause des problèmes techniques suivants :
- La concentration pulvérisable est faible pour réaliser des assemblages corrects. Avec des concentrations élevées, au lieu de particules fines d'adhésif, on obtient des gouttes mouillantes, des filaments et parfois des jets. Cette difficulté combinée avec la couleur jaune du liant rendent impossible leur utilisation dans plusieurs activités professionnelles.
- La compatibilité des adhésifs à base de blocs copolymères styréniques insaturés avec les tackifiants, les huiles plastifiantes, les solvants hydrocarbures aliphatiques et avec les propulseurs écologiques (Butane-Propane par exemple) est faible et difficilement maîtrisable. Depuis la mise en application des règlements concernant la protection de l'environnement, de la santé publique et de la sécurité, les fabricants sont obligés de retirer leurs produits du marché pour les reformuler. Force est de constater qu'aucun adhésif pulvérisable reformulé ne peut satisfaire à la fois toutes les nouvelles conditions techniques, écologiques et économiques. En effet l'utilisation des hydrocarbures aliphatiques et écologiques rend la reformulation difficile et parfois impossible.

En conséquence, pour développer l'utilisation industrielle des adhésifs en solution et pulvérisables à base de blocs copolymères styréniques, il faut trouver une réponse valable pour résoudre les deux problèmes techniques sus-mentionnés.

Nous avons découvert avec surprise que lorsque les blocs copolymères styréniques linéaires hydrogénés sont mélangés avec des tackifiants hydrogénés et des huiles plastifiantes hydrogénés ou saturés et aliphatiques, avec un mélange riche en solvants hydrocarbures aliphatiques, nous obtenons des adhésifs presque incolores en solution, de basse viscosité et facilement pulvérisables par aérosol même avec des concentrations d'extrait sec de 20 % en poids. Le brouillard est constitué uniquement par des particules fines adhérentes et sans filaments. Cette découverte apporte la réponse idéale pour résoudre les deux problèmes techniques sus-mentionnés et permet de fabriquer et d'utiliser industriellement des adhésifs en solution à base de blocs copolymères styréniques.

Ces résultats montrent que l'hydrogénation des blocs copolymères styréniques, des tackifiants et des huiles plastifiantes augmente non seulement leur compatibilité, mais encore avec les solvants hydrocarbures aliphatiques, avec les propulseurs et améliore finalement la pulvérisabilité de l'adhésif.

Avant la divulgation de cette invention, l'hydrogénation avait uniquement pour but de renforcer la résistance à la chaleur des adhésifs thermofusibles pendant la fabrication et l'application, et la résistance au vieillissement des mastics et des vernis.

Les adhésifs pulvérisables en solution sont largement utilisé par des artisans et par les industries d'arts graphiques, du textile, du cuir et dans les activités de bureau, de décoration et de bricolage pour encoller des surfaces irrégulières, de grandes dimensions, pour réaliser des assemblages. Ils sont connus sous les appellations d'adhésifs repositionnables, de fixation définitives ou temporaires.

Les adhésifs pulvérisables en aérosol écologique les plus performants sont à base copolyacrylique. Les plus connus sont commercialisés par 3M sous les marques commerciales de REMOUNT et SPRAYMOUNT. Leurs compositions sont divulguées dans les brevets US 3.357.622 et 4.994.322. Mais la fabrication de particules polyacryliques partiellement insolubilisées et la technique de conditionnement pour avoir un milieu thixotropique sont difficiles.

La recherche d'antériorité a relevé les documents WO-A-90 OOO65 (H.B. FULLER) et US-A-4 833 193 (SIEVERDING).

Le document WO-A-90 00065 divulgue la composition des adhésifs à laminer, thermofusibles et pulvérisables sous forme d'une fibre fine à température de fusion de 250 °F (Page 18, lignes 1-9) pour fabriquer des composites laminés et résistants au décollage induit par l'humidité. Les blocs copolymères styréniques utilisés sont des insaturés linéaires ou étoilés. Les blocs copolymères styréniques hydrogénés et les plastifiants à haute température de fusion sont utilisés pour augmenter la stabilité thermique de l'adhésif pendant la fabrication et l'application (Page 8, ligne 20) et éviter le décollage du composite à température élevée (Page 11, ligne 13). Après la pulvérisation à chaud, cet adhésif reste liquide assez longtemps pendant le refroidissement pour pénétrer rapidement dans les couches du composite.
Le document US-A-4 833 193 (SIEVERDING) divulgue la composition des films 100 % solide, d'adhésifs autocollants ou sensibles à la pression dont les épaisseurs sont d'1 Mil à 1 Inch. Ils sont particulièrement applicables sur la peau et les cheveux pour le maquillage et la décoration théâtrales. Ils sont aussi utilisables comme mastic pour boucher des trous des réservoirs, des pneus et pour protéger ou pour suspendre les objets pendant l'exposition ou le transport. Pour obtenir un film épais à 100 % solide prêt à utiliser, soit les constituants sont mélangés à chaud et puis extrudés, soit les constituants sont solubilisés dans un mélange de 1.1.1,trichloroéthane et de dipentène et puis coulés et séchés.

Les adhésifs formulés selon cette composition sont très collants et de très faible cohésion. Ils ne sont pas utilisables comme adhésifs repositionnables et de fixations définitives selon notre invention. Ils se comportent comme un solide avec un écoulement liquide (Page 8, lignes 60-63). Ils se présentent sous forme d'un gel épais (Page 1, ligne 6). Ils ne font pas mal à la peau lors du décollage (Page 8, lignes 52-53). Ils peuvent être remodelés plusieurs fois (Page 7, ligne 63). Selon ce document, l'utilisation des constituants hydrogénés a pour but de formuler un adhésif résistant à la dégradation causée par l'oxygène, par l'ozone et par la lumière UV (page 2, lignes 13-15) et sans provoquer de traumatismes à la peau (page 8, lignes 50-51).

Les informations à l'état individuel et à l'état combiné de ces deux documents ne permettent pas à un homme du métier de fabriquer ni utiliser des adhésifs selon notre invention.

Ils ne divulguent aucune information concernant la compatibilité des constituants hydrogénés entre eux et avec les solvants et les propulseurs pour fabriquer l'adhésif en solution à pulvériser selon notre invention, ni aucune information concernant les équipements et les conditions de pulvérisation en solution pour obtenir la pulvérisation caractéristique d'adhésif selon notre invention.

La recherche d'antériorité relève encore les documents US-A-4 745 139 (HAASL ET AL.) et EP-A-0 410 011 (AICA KOGYO).

Le document US-A-4 745 139 (HAASL ET AL.) divulgue la composition des produits de revêtement élastomère contenant des solvants, des bulles de verre et pulvérisables par pistolet à air comprimé et par aérosol. Ces produits anti-glissants sont utilisés pour revêtir les surfaces des surfs et des planches à voile. Ils sont formulés en mélangeant les blocs copolymères styréniques hydrogénés avec des tackifiants, des résines Méthacryliques, des bulles de verre et des silices dans un mélange de solvants. Selon ce document, ces formulations sont réalisables avec des blocs copolymères styréniques insaturés, mais avec une concentration plus élevée d'agent antioxydant (pages 4-5, lignes 66-2). La présence des blocs copolymères styréniques a pour but d'obtenir les propriétés suivantes :
- Hautes propriétés anti-glissantes du revêtement en présence de l'eau grâce à sa bonne combinaison avec les bulles de verre (page 1, lignes 42-49).
- Un revêtement résistant à l'Oxygène, aux rayons ultraviolets (page 4, lignes 65-66) et au soleil (page 5, ligne 30) si les blocs copolymères styréniques hydrogénés sont utilisés.
- Une meilleure force cohésive (page 6, lignes 9-12).
- Un bon équilibre entre les forces adhésives et cohésives avec la résine Méthacrylique (page 6, lignes 4-8).

Selon ce document, ces produits sont pulvérisables avec un système d'air comprimé et d'aérosol à cause de la sélection des constituants (page 1, lignes 38-39) mais aucun exemple détaillé concernant les équipements et les conditions de pulvérisation n'a été donné. il est important de rappeler qu'avec les mêmes équipements utilisés, les caractéristiques de pulvérisation et les propriétés finales à obtenir des produits de revêtement et des adhésifs autocollants sont totalement différents, à savoir :
- Dans le cas des produits de revêtement, il faut réaliser une couche mouillante (Page 5, ligne 58) sur le support à revêtir pour former un film homogène de haute cohésion et de collant nul après séchage. Le brouillard de pulvérisation est constitué par des gouttes fines de solution à revêtir.
- Dans le cas des adhésifs, particulièrement avec des adhésifs selon notre invention et avec des surfaces absorbantes comme le papier et le tissu, il faut réaliser une couche humide et non pénétrante sur la surface à coller. Avec une pulvérisation mouillante comme celle pour des produits de revêtement, les adhésifs pénètrent dans le substrat et perdent totalement le pouvoir collant. En d'autres termes, leur brouillard de pulvérisation est constitué par des particules fines adhérentes et sans filament. Après séchage, les adhésifs doivent avoir à la fois le collant et la cohésion dont l'équilibre est dosé selon les applications envisagées.

Le document EP-A-0 410 011 (AICA KOGYO) divulgue la composition des mastics thermofusibles pour assembler la lentille sur le logement de la lampe de voiture. Les mastics sont résistants au vieillissement sous des conditions sévères, à la température élevée ou à basse rempérature en présence de l'humidité (Page 1, lignes 26-28) à la fois sous pression et à haute température (Page 1, ligne 31). Selon ce document, les mastics sont formulés avec un mélange de blocs copolymères styréniques hydrogénés avec le caoutchouc Butyle, la cire oléfinique de température de ramollissement supérieure à 110°C, l'agent de couplage, l'antioxydant, le colorant, le tackifiant et l'assouplissant (Page 1, lignes 39-43). La présence des blocs copolymères styréniques dans le mastic lui confère une bonne élasticité et une bonne cohésion. Une meilleure résistance au vieillissement est conférée par les blocs copolymères hydrogénés s'ils sont utilisés à la place des blocs copolymères styréniques insaturés (Page 2, ligne 16).

Ces deux documents ne permettent pas à un homme du métier de fabriquer ni utiliser des adhésifs pulvérisables selon notre invention parce qu'ils ne donnent pas les informations suivantes :
- La composition des adhésifs à la fois collants et cohésifs.
- La compatibilité des constituants hydrogénés entre eux et avec les solvants et les propulseurs pour fabriquer les adhésifs en solution à pulvériser.
- Les informations concernant les équipements et les conditions de pulvérisation pour obtenir la pulvérisation selon notre invention.

Le premier objectif de cette présente invention est la mise au point d'une composition permettant de fabriquer des adhésifs repositionnables et de fixation définitive et pulvérisables par pistolet à air comprimé et par aérosol de concentration du liant plus élevée que 3 % en poids, qui forment un brouillard de particules fines adhérentes et sans filament pendant leur décharge à travers l'orifice d'un système de pulvérisation.

Le second objectif est la mise au point des conditions et les équipements de pulvérisation des adhésifs repositionnables et de fixation définitive ou temporaire pour leur utilisation dans les industries des arts graphiques, du textile, du cuir et dans les activités de bureau, de décoration et de bricolage.

Le dernier objectif est de formuler des adhésifs pulvérisables écologiques, en bonne concordance avec la législation en vigueur et non agressifs aux substrats sensibles.

L'utilisation des constituants hydrogénés ou aliphatiques selon l'invention permet de réaliser des adhésifs pulvérisables qui satisfont les objectifs suscités, car le liant élastomère thermoplastique hydrogéné possède les caractéristiques suivantes :
- Il est très compatible avec le mélange de solvants constitué d'une grande proportion d'hydrocarbure aliphatique de C5 à C10 et les propulseurs hydrocarbures écologiques. On obtient des solutions claires de plus faibles viscosités que celles avec des constituants insaturés et elles peuvent être diluées avec une très forte quantité de solvants hydrocarbures comme l'isoHexane sans être troubles.
- Il a une très faible tendance à former des filaments dans le brouillard de pulvérisation. Les particules pulvérisées sont fines adhérentes et régulières.

En conclusion, l'adhésif en solution et pulvérisable avec un bon équilibre entre la pulvérisabilité, les propriétés techniques et l'écologie est obtenu avec un mélange de solvants liquides et volatiles et avec un liant formulé avec le bloc copolymères styréniques linéaires hydrogéné, avec les tackifiants hydrogénés de haute température de ramollissement, avec les huiles plastifiantes hydrogénées ou les résines liquides aliphatiques saturées ou les tackifiants hydrogénés liquides à la température ambiante, et avec une faible quantité d'antioxydant, d'anti-UV, de promoteur d'adhésion, de résines aromatiques et de charges.

En fait, l'adhésif pulvérisable est constitué d'un mélange de solvants liquides et volatiles, de propulseurs écologiques, au moins 3 % en poids d'un liant normalement autocollant, sensible à la pression, élastomère thermoplastique et constitué de :
(a) 20 % à 60 % en poids de blocs copolymères styréniques linéaires hydrogénés ;
(b) 20 % à 60 % en poids de tackifiants hydrogénés dont les températures de ramollissement sont de 70°C à 160°C ;
(c) 0,1 % à 40 % en poids d'huiles plastifiantes ou de résines liquides aliphatiques saturées ou de tackifiants hydrogénés liquides à la température ambiante ;
(d) 0,1 % à 15 % en poids d'antioxydant, d'anti-UV, de promoteur d'adhésion, de résines aromatiques et de charges.

L'adhésif fabriqué selon la composition de l'invention forme un brouillard de particules fines et adhérentes, sans filament lorsqu'il est déchargé à travers l'orifice d'un système de pulvérisation du pistolet à air comprimé ou d'aérosol.

Comme le mélange de solvants est constitué par une grande proportion d'hydrocarbure aliphatique de faible paramètre de solubilité d'Hildebrand et non agressif, l'adhésif est applicable sur les supports sensibles comme les mousses de polystyrène.

Les adhésifs pulvérisables particulièrement par aérosol conviennent pour des applications où une pulvérisation fine, précise et délicate est obligatoire. Exemple : les (re)montages et les (re)positionnements dans l'industrie des arts graphiques, la décoration, du textile.

Les adhésifs pulvérisables particulièrement par pistolet à air comprimé conviennent pour des applications où une pulvérisation fine, précise sur de grandes surfaces est obligatoire. Exemple : les (re)montages et les (re)positionnements des cuirs de grandes dimensions dans l'industrie de découpe informatisée avec le jet d'eau.

En augmentant les proportions de tackifiants et d'huiles plastifiantes de la composition selon l'invention, l'adhésif peut avoir un tack de longue durée. En l'appliquant sur une seule face à coller il donne une bonne propriété repositionnable et une excellente adhésion sur des substrats poreux et non poreux comme le papier, le tissu, le bois, le plastique, le verre, l'acier.

En diminuant la proportion d'huiles plastifiantes ou en utilisant des charges ou de résines aromatiques renforçantes de la composition selon l'invention, l'adhésif peut avoir une cohésion élevée et un temps ouvert assez long pour fabriquer l'adhésif à fixation définitive. En l'appliquant sur les faces à coller, on peut réaliser des assemblages définitifs.

Pour mieux illustrer cette présente invention, la description détaillée concernant la composition de l'adhésif pulvérisable est la suivante :

Les blocs copolymères styréniques sont commercialement disponibles par exemple : CARIFLEX et KRATON de SHELL Chimie, EUROPRENE d'ENICHEM, STEREON de FIRESTONE, XU de DOW, FINAPRENE de FINA.
Ils sont obtenus par polymérisation anionique de Styrène ou alpha MéthylStyrène (S) avec Butadiène (B) ou Isoprène (I) suivie d'une réaction de couplage pour augmenter le nombre de blocs. On les appelle blocs copolymères styréniques linéaires si les nombres de blocs sont deux et trois, par exemple SB et SI, SBS et SIS. La proportion du Styrène est de 10% à 40 % en poids. Comme la phase élastomère constituée de polybutadiène et de polyisoprène est encore insaturée, les SB, SI, SBS et SIS sont appellés blocs copolymères styréniques linéaires insaturés. Les méthodes de fabrication de ces blocs copolymères sont divulguées dans les brevets US 3.239.478, 3.427.269, 3.700.633, 3.753.936 et 3.932.327. Lorsques les SB, SI, SBS et SIS linéaires sont hydrogénés on obtient successivement SEB, SEP, SEBS et SEPS où E est Ethylène, P est Propylène et B est Butylène. On les appelle blocs copolymères styréniques linéaires hydrogénés. La société SHELL Chimie les commercialise sous la marque commerciale de KRATON G dont les données techniques sont divulguées dans la brochure de SHELL KR.G.2.1.(F) et SC 68-86.

Si les SBS, SB, SIS et SI insaturés sont déjà utilisés pour formuler l'adhésif pulvérisable par pistolet à air comprimé et par aérosol, ils ne donnent pas satisfaction aux utilisateurs à cause de leur forte tendance à formation de filaments, de l'utilisation des solvants chlorés ou agressifs. On arrive au maximum à 15 % du liant pour la pulvérisation par pistolet à air comprimé et à 5 % du liant pour la pulvérisation par aérosol. D'ailleurs leurs propriétés finales sont nettement inférieures à celles de SPRAYMOUNT de 3M à base polyacrylique.

Pour réaliser la composition selon cette présente invention le liant est constitué de 20 % à 60 % en poids de blocs copolymères styréniques linéaires hydrogénés dont la proportion de Styrène est de 10 à 40 % en poids.

Après l'hydrogénation les blocs copolymères styréniques linéaires hydrogénés se composent de deux phases. La phase thermoplastique polystyrène qui assure la cohésion. La phase élastomère saturée en polyEthylènePropylène ou polyEthylèneButhylène qui assure la souplesse et le collant. On appelle la résine renforçante, les constituants qui se dissolvent préférentiellement dans la phase thermoplastique pour augmenter la cohésion à la température ambiante. Les résines ou prépolymères aromatiques sont très efficaces pour assurer ce rôle. On appelle la résine tackifiante ou plastifiante, les constituants qui se dissolvent préférentiellement dans la phase élastomère pour augmenter le collant à la température ambiante. Les résines ou prépolymères aliphatiques ou hydrogénés sont trés efficaces pour assurer ce rôle.

Le problème deviendra plus complexe avec des constituants qui se dissolvent dans les deux phases où on fait intervenir la température de ramollissement des constituants et la température d'activation du liant. Il faut réaliser des essais poussés et des mesures viscoélastiques pour déterminer les comportements dominants. C'est la raison pour laquelle on trouve certaines publications où le terme tackifiant est utilisé pour désigner les constituants sus-mentionnés.

A la température ambiante, les blocs copolymères styréniques hydrogénés sont des solides de bonne cohésion. Pour formuler le liant selon l'invention, les blocs copolymères sont d'abord rendus autocollants en les mélangeant avec des tackifiants et des huiles plastifiantes compatibles. L'addition plus tard de résines renforçantes et de charges a pour but d'optimaliser le rapport entre la cohésion et le collant ou pour abaisser le coût de fabrication ou pour obtenir des propriétés particulières.

Les fabricants de résines tackifiantes et renforçantes les plus connus sont HERCULES, EXXON, GOODYEAR, ARIZONA, NEVILLE, REICHHOLD, ARAKAWA, SHELL, ARCO, WITCO.

SHELL et HERCULES ont développé des techniques pour étudier la compatibilité des huiles plastifiantes et des tackifiants avec les blocs copolymères. La technique de HERCULES se base sur les points de trouble dans des mélanges de solvants, pour obtenir le collant. Elle est divulguée dans la brochure de HERCULES 25.029-E1. La technique de SHELL se base sur la transparence du film par exemple celui obtenu à partir d'une solution après le séchage. Elle est divulguée dans la brochure de SHELL TR 5.1.2 (F)

SUNG GUN CHU de HERCULES a développé la méthode basée sur la variation des températures de transition vitreuse de deux phases en mesurant les propriétés viscoélastiques du mélange. Cette méthode est publiée dans Journal of Applied Polymer Sciences. Vol 30, page 825-842 February 1985.

SHELL RESEARCH à WESTHOLLOW, HOUSTON a développé la technique basée sur l'indice d'insaturation aliphatique Ui mesurée par la Résonance Magnétique Nucléaire pour étudier le durcissement UV et aux rayons d'électron (EB) des blocs copolymères styréniques. La concentration totale d'insaturation Uf de la formulation est calculée à partir des Ui et les concentrations en poids de tackifiant et de plastifiant si le bloc copolymère styrénique utilisé est toujours le même. Voir Note technique TR 8.28 de SHELL CHIMIE.

Nous avons généralisé cette technique pour estimer la compatibilité des tackifiants, des huiles plastifiantes aliphatiques hydrogénés, des blocs copolymères styréniques et des solvants hydrocarbures aliphatiques, par exemple :
- Pour les blocs copolymères : les blocs copolymères styréniques hydrogénés avec Ui de l'ordre de 4 % sont plus compatibles avec les solvants hydrocarbures aliphatiques, avec des tackifiants hydrogénés et avec des huiles plastifiantes hydrogénés que les blocs copolymères styréniques insaturés comme SIS et SBS avec Ui de l'ordre de 30 - 40 % ;
- Pour les tackifiants : REGALITE R101 totallement hydrogéné avec Ui de 0.6 % est plus compatible avec les blocs copolymères hydrogénés que REGALITE S-260 partiellement hydrogéné avec Ui de 14.6 % ;
- Pour les huiles plastifiantes : SHELLFLEX 451 avec Ui de 2.9 % est plus compatible avec les blocs copolymères hydrogénés que REGALREZ 1018 et HERCURE C10 avec Ui de 5.O % et de 18 % ;
- Pour obtenir un liant de haut collant on mélange de REGALITE R101 avec SHELLFLEX 451 avec des blocs copolymères styréniques linéaires hydrogénés car Uf sera plus faible ;
- Pour obtenir un liant de plus haute cohésion on mélange de REGALITE S260 avec REGALREZ 1018 ou avec HERCURE C10 avec des blocs copolymères styréniques linéaires hydrogénés car Uf sera plus élevé.

Pour conclure, la méthode pour pré-évaluer la compatibilité des blocs copolymères styréniques hydrogénes avec les tackifiants et des huiles plastifiantes et leur influence sur les propriétés du liant est la suivante :
- Les tackifiants et les huiles plastifiantes ayant des indices Ui plus proches sont plus compatibles entre eux ;
- Si les valeur des Ui sont faibles, ils sont plus compatibles avec les solvants hydrocarbures aliphatiques de faible paramètre de solubilté HILDEBRAND et avec des blocs copolymères hydrogénés ;
- Si les valeurs des Ui sont élevés, ils sont plus compatibles avec les solvants de haut paramètre de solubilté HILDEBRAND et moins compatibles avec des blocs copolymères hydrogénés ;
- Avec des blocs copolymères hydrogénés, les compositions ayant la valeur Uf la plus faible sont plus compatibles avec les solvants hydrocarbures aliphatiques et donnent un collant ou un tack plus élevé et une cohésion plus faible.
- Avec des blocs copolymères hydrogénés, les compositions ayant la valeur Uf plus élevée sont moins compatibles avec les solvants hydrocarbures aliphatiques et donnent un faible collant et une cohésion plus élevée.

Notons que Uf =ΣUi x C où C est la concentration en poids de chaque constituant. Ui est déterminé par RMN selon la méthode de SHELL.

En se basant sur cette méthode, la composition pour réaliser des adhésifs pulvérisables pour fabriquer des adhésifs repositionnables et de fixation définitive ou temporaire est la suivante :
- 20 % à 60 % en poids de tackifiants hydrogénés dont la température de ramollissement est de 70°C à 160°C, et à base de résines hydrocarbures hydrogénées, hydrocarbures aliphatiques, de Dicylopentadiènes hydrogénés, d'ester et alcool de colophanes hydrogénés par exemple : Ecorez Série 5000 de EXXON ; Hercures C, CX, CZ, Piccopale 100, Regalite S260, Regalrez 1076, Foralyn 90, 110, Foral 85E, 105E de HERCULES.
- 0,1 % à 40 % en poids d'huiles plastifiantes paraffiniques, naphténiques ou résines liquides aliphatiques saturées de poly(iso)butylène ou de tackifiants hydrogénés liquides à la température ambiante, par exemple : Tufflo 6000 d'ARCO ; Plastic Oil 260 de WITCO ; Oppanol B1 et B3 de BASF ; Regalrez 1018, Adtac LV, Hercure C10, Abitol, Cellolyn 21 de HERCULES.

Il est bien entendu qu'il est impossible de donner une liste exhaustive de marques commerciales de tous les tackifiants et huiles plastifiantes utilisables pour formuler le liant de la composition selon l'invention.

Pour aider les formulateurs de déterminer les concentrations de constituants en fonction des propriétés recherchées, les fabricants de résines ou de blocs copolymères divulguent les diagrammes à courbe de niveaux ou les "topos" par exemple la brochure SHELL KR.G.2.1.(F).

Du fait de formuler le liant avec des constituants hydrogénés, l'adhésif est de façon évidente de bonne résistance à l'oxydation, au vieillissement et au jaunissement. Si les conditions d'utilisation particulière justifient la nécessité, une faible quantité de 0,2 % à 1 % en poids d'antioxydant et d'anti-UV peuvent être ajoutés dans la composition, par exemple Irganox et Tinuvin de CIBA et GEIGY ; Uvinul de GAF.

Pour favoriser l'adhésion sur les surfaces à coller, une quantité de 0,1 % à 1 % de promoteur d'adhésion est ajoutée dans le liant, par exemple les Titanates de KENRICH Chemicals et les OrganoSilanes fonctionnalisés d'UNION CARBIDE.

Pour chercher des effets rhéologiques, d'antistatique, de mattage ou de renforcement de la cohésion, une quantité de 0,1 % à 10 % de charges est ajoutée dans le liant, par exemple les silices pyrogéniques de DEGUSSA et de CABOT Corporation, les silices précipités de RHONE-POULENC, les Alumines, les Oxydes de Titane et les agents de mattage comme Aérosil TK 100, 0K 412 de DEGUSSA.

Pour améliorer économiquement la cohésion, une quantité de 0,1 % à 15 % de résines aromatiques est ajoutée dans le liant, par exemple résines de purs monomères aromatiques ou résines aromatiques de pétrole de HERCULES comme PICCOTEX, ENDEX, KRISTALEX, HERCURES ; de NEVILLE comme NEVCHEM, LX 685, LX 1035 ; d'AMOCO comme AMOCO 18.

Pour pulvériser avec succès une solution d'adhésif, il faut maîtriser à la fois la fabrication de la solution à pulvériser et les équipements.

Comme l'adhésif doit rester à la surface pour assurer la solidité d'assemblage, la pulvérisation est réglée selon la porosité ou l'absorbance de la surface à coller, à savoir :
- Avec des surfaces absorbantes et sensibles comme le papier, le tissu, le polystyrène, la mousses, les particules d'adhésif au moment où elles touchent la surface doivent être légèrement humides, fines, adhérentes et peu pénétrantes. Si les particules sont encore mouillantes, le liant est absorbé et perd le pouvoir collant. Dans ce cas, selon le vocabulaire technique, on dit que l'adhésif est tué. Une méthode particulièrement efficace pour apprécier la pulvérisation est l'utilisation d'un papier de téléfax qui en contact avec des particules contenant de MéthylEthylCétone MEK donnent des taches noirâtres bien visibles.
- Avec des surfaces non absorbantes comme les plastiques, la pulvérisation peut être mouillante ou sèche selon les conditions d'utilisation. Généralement la pulvérisation sèche ou humide est plus favorable parce que l'assemblage est immédiatement réalisable sans temps perdu pour le séchage.

Pour fabriquer la solution à pulvériser le liant de la composition selon l'invention est solubilisé dans un mélange liquide organique à l'aide d'un dissolveur muni d'un agitateur. Il est constitué d'hydrocarbure aliphatique de C5 à C10, d'hydrocarbure cycloaliphatique, de cétone, d'ester, d'ether et d'hydrocarbure aromatique de telle manière que :
- Le paramètre de solubilité HILDEBRAND du mélange de solvants pour dissoudre les constituants soit le plus faible possible, en d'autres termes la concentration de solvants hydrocarbures aliphatiques pour dissoudre la phase élastomère soit la plus élevée possible, et la concentration des solvants de haut paramètre de solubilité pour dissoudre la phase thermoplastique soit la plus faible possible. Noter que les critères de sélection des solvants compatibles avec le bloc copolymère styrénique hydrogéné ont été divulgués dans les brochures de SHELL SC:72-85 et KR.G.2.1.(F).
- La vitesse d'évaporation relative du mélange soit supérieure à celle de l'Acétate de n-Butyle (100). La volatilité du solvant est mesurée par la vitesse d'évaporation relative selon ASTM D 3539 où l'Acétate de n-Butyle est utilisé comme référence 100.
- Les conditions concernant les préparations dangereuses selon l'Arrêté Français du 11 Octobre 1983 et celles de la règle 66 de Los Angeles pour formuler un mélange liquide organique non toxique, non nocif et non polluant soient respectées.

Pour réaliser une pulvérisation aérosol, le mélange liquide organique volatile, appellé le produit actif selon le vocabulaire technique d'aérosol, est mélangé avec une quantité la plus faible possible de propulseurs. Noter que la pression diminue le paramètre de solubilité HILDEBRAND. Les propulseurs écologiques sont le Butane, le Propane, le DiméthylEther, le gaz Carbonique, les protoOxydes d'Azote, les HCFA et HFC. Les valves et les diffuseurs sont très importants pour obtenir la pulvérisation recherchée. La pulvérisation par aérosol est plus difficile à réaliser que celle par pistolet à air comprimé car à la sortie du diffuseur la solution est immédiatement refroidie par l'évaporation ultra-rapide des propulseurs. Il faut effectuer des essais poussés avec la collaboration d'un conditionneur à façon ou un fabricant de valves et diffuseurs comme REBOUL SMT, LINDAL, PRECISION. Les valves CA 74 LBS CTNPS Néoprène 182 cm et CA 74 PTPU CT B20 OPS de la société REBOUL-SMT donnent de bons résultats. Les diffuseurs tourbillonnaires REBOUL F05 4013 4830 et F03 4013 3830 donnent des pulvérisations plus sèches et plus fines que les diffuseurs directs.

- Pour réaliser la solution pulvérisable par pistolet à air comprimé, le produit actif est dilué progressivement avec le même mélange de solvants pour arriver à la concentration pulvérisable. Contacter un fabricant de pistolet à air comprimé par exemple les sociétés G2M, SATAZ pour avoir des conseils techniques utiles. En réglant le débit, la pression, la forme de jet, la dimension de l'orifice, on arrive à réaliser la pulvérisation recherchée. Par exemple :

La composition selon l'invention préparée par la dissolution dans un ballon muni d'un agitateur mécanique à la température ambiante de 320 g du liant dans 612 g d'isoHexane et 68 g de MéthylEthylCétone. La concentration du liant de 32 % en poids est successivement diluée avec le mélange constitué de 90 % d'isoHexane et 10 % de MéthylEthylCétone (MEK) pour fabriquer des compositions plus diluées. En pulvérisant à 4 Bars et avec un débit de 60 g/Minute avec un pistolet à air comprimé (SATA LMZ) dont l'orifice de sortie est de 0.5 mm, on détermine la concentration à laquelle une pulvérisation fine sans filament est obtenue. Cette concentration est utilisée pour déterminer la pulvérisabilité de la solution. Il est évident que la pulvérisabilité est plus élevée si la concentration du liant est plus élevée. En d'autres termes la composition est plus adéquate pour fabriquer les adhésifs pulvérisables selon la présente invention.

Pour mieux illustrer cette présente invention, les exemples plus détaillés concernant la composition de l'adhésif pulvérisable sont les suivants :

### EXEMPLE 1 : Influence de l'hydrogénation des blocs copolymères sur la pulvérisabilité

Les formulations concentrées préparées avec les blocs copolymères styréniques linéaires insaturés (CARIFLEX ou KRATON D de SHELL Chimie) et hydrogénés (KRATON G de SHELL Chimie) selon l'invention sont obtenues en dissolvant 12 g de KRATON (soit 37,5 % du liant), 12 g REGALITE S260 HERCULES (résine hydrocarbure hydrogénée dont la température de ramollissement est de 100° C, soit 37,5 % du liant), 8 g d'Oppanol B1 de BASF (polyisoButylène liquide à 36 cP, soit 25% du liant), 6.8 g de MEK et 61.2 g d'IsoHexane. La concentration du liant est de 32 % en poids.

**Tableau N°1 :**

| Pulvérisabilité de blocs copolymères styréniques linéaires insaturés et hydrogénés. | | | | | | |
|---|---|---|---|---|---|---|
| KRATON | Styrène % | Triblocs % | Diblocs % | Masse molaire | Concentration copolymère % | pulvérisable liant % |
| Blocs copolymères styréniques linéaires insaturés | | | | | | |
| D1101 | 31 | SBS:85 | SB:15 | élevée | 1,9-2,3 | 5-6 |
| D1102 | 29 | SBS:85 | SB:15 | faible | 2,3-2,6 | 6-7 |
| D1107 | 15 | SIS:85 | SI:15 | moyenne | 1,9-2,3 | 5-6 |

| Blocs copolymères styréniques linéaires hydrogéné | | | | | | |
|---|---|---|---|---|---|---|
| G1650 | 29 | SEBS:100 | SEB:0 | moyenne | 3,4-3,7 | 9-10 |
| G1652:78 | 29 | SEBS:85 | SEB:15 | faible | 5,3-5,7 | 14-15 |
| +G1726:22 | | | | | | |
| G1652 | 29 | SEBS:100 | SEB:0 | faible | 4,9-5,3 | 13-14 |

Les résultats expérimentaux obtenus par la pulvérisation par pistolet à air comprimé, consignés dans le tableau N°1 ont montré que la tendance à formation de filaments est plus faible avec les liants à base de KRATON G hydrogéné qu'avec ceux à base de KRATON D insaturé, car leurs concentrations pulvérisables sans filament en copolymère et en liant sont beaucoup plus élevées.

### EXEMPLE 2 : Influence des masses moléculaires sur la pulvérisabilité

Les résultats de pulvérisation avec des formulations diluées à partir des formulations concentrées préparées dans les conditions de l'exemple 1, consignés dans le tableau N°2 ont montré que :
- La pulvérisation est plus facile avec l'augmentation des diblocs de faibles masses moléculaires ;

**Tableau N°2 :**

| **Influence des masses moléculaires sur la pulvérisabilité.** | | | | | |
|---|---|---|---|---|---|
| KRATON % | Styrène % | Triblocs % | Diblocs % | Masse molaire | Concentration pulvérisable liant % |
| Blocs copolymères styréniques linéaires hydrogéné | | | | | |
| G1652:100 | 29 | SEBS:100 | SEB:0 | faible | 13-14 |
| G1652:78 | 29 | SEBS:85 | SEB:15 | faible | 14-15 |
| +G1726X:22 | | | | | |
| G1652:57 | 29 | SEBS:70 | SEB:30 | faible | 15-16 |
| +G1726X:43 | | | | | |
| G1652:29 | 29 | SEBS:50 | SEB:50 | faible | 17-18 |
| +G1726X:71 | | | | | |
| G165O:1OO | 29 | SEBS:100 | SEB:0 | moyenne | 9-10 |
| G1650:50 | 29 | SEBS:100 | SEB:0 | moyenne | 11-12 |
| +G1652:50 | | | | faible | |
| G1650:57 | 29 | SEBS:70 | SEB:30 | moyenne | 11-12 |
| +G1726X:43 | | | | faible | |
| G1657X:100 | 13 | SEBS:70 | SEB:30 | élevée | 9-10 |
| G1657X:50 | 21 | SEBS:50 | SEB:50 | élevée | 10-11 |
| +G1726X:50 | | | | faible | |
| G1701X:100 | 37 | SEPS:0 | SEP:100 | élevée | 9-10 |
| G1701X:67 | 34 | SEBS:32 | SEP:67 | élevée | 10-11 |
| +G1652:32 | | faible | | | |

| Blocs copolymères styréniques linéaires insaturés | | | | | |
|---|---|---|---|---|---|
| D1101:100 | 31 | SBS:85 | SB:15 | élevée | 5-6 |
| D1107:100 | 15 | SIS:85 | SI:15 | moyenne | 5-6 |
| D1112:100 | 15 | SIS:60 | SI:40 | moyenne | 8-9 |

- Les meilleurs résulats sont obtenus avec les blocs copolymères styrénique linéaires hydrogénés ;
- La pulvérisation est plus facile avec des copolymères de masses moléculaires plus faibles.

### EXEMPLE 3 : Fabrication de l'adhésif pulvérisable par aérosol

Une solution concentrée de 34 % en poids du liant est formulée selon les conditions suivantes :
- KRATON hydrogénés :: 10 % soit 29.4 % du liant
- (KRATON G 1652 :: 43 % ; KRATON G 1726X : 57 %)
- REGALREZ 1O76 :: 12 % soit 35.63 % du liant
- SHELLFLEX 451 :: 12 % soit 35.3 % du liant
- Toluène :: 12 %
- IsoHexane :: 54 %

Ce mélange de KRATON G se compose de SEBS : 60 % et de SEB : 40 %. 93g de cette solution sont versés dans un boîtier en fer blanc de 65X195 de 650 mL qui est scellé avec une valve de REBOUL CA 74 LBS CTNPS Néoprène 182 cm et rempli avec 114 g de propulseur de Butane-Propane 3.2 Bar et 113 g de DiMéthyl-Ether. La pression intérieure de l'aérosol est de 3,8-4,0 Bar à 22° C. La concentration du liant dans l'aérosol est de 9,9 % en poids. Un diffuseur de REBOUL FO5 4013 4830 est placé sur la valve. Quand cette préparation est pulvérisée de 35-30 cm de distance, sur un papier à écrire ou non tissé, elle donne un brouillard de particules fines, sans filament et une couche immédiatement autocollante, uniforme, sèche et presque invisible. Les résultats de la dilution montrent que la concentration pulvérisable de cette formulation est de l'ordre de 18 %.

Dans un essai comparatif, le mélange de KRATON G hydrogénés est remplacé par selui de KRATON D insaturés constitué de KRATON D 1101 : 62 % et de KRATON D 1118X : 38 % pour formuler le mélange équivalent de SBS : 60 % et SB : 40 %. Pour dissoudre le liant, l'isoHexane est remplacé par MéthylEthylCétone. Cette solution comparative est conditionnée selon les mêmes équipements que ce présent exemple et diluée uniquement avec le propulseur de DiMéthylEther car la présence du Butane Propane peut provoquer l'insolubilisation et la formation de grosses particules. La concentration pulvérisable sans filament est d'environ 5 % qui est nettement inférieure à 18 % en poids de celle de la composition formulée avec les KRATON G hydrogénés.

### EXEMPLE N°4 : Influence du tackifiant et de l'huile sur la pulvérisabilité

Les résultats comparatifs et expérimentaux consignés dans le tableau N°3 montrent clairement qu'il faut formuler le liant avec une quantité plus importante de tackifiant et d'huile compatibles pour obtenir une valeur donnée de tack dans le cas des blocs copolymères styréniques hydrogénés. En d'autres termes, la concentration de copolymère dans le liant est plus faible et la composition est plus facilement pulvérisée (Voir le tableau n°2).

**Tableau N°3 :**

| Influence de tackifiant et d'huile | | | |
|---|---|---|---|
| KRATON % | Tackifiant % | Huile % | Tack PSTC 6, Cm |
| Blocs copolymères styréniques linéaires insaturés | | | |
| D1107 : 50 | Regalite S260 : 50 | Sans | 2,5 - 2,0 |
| D1102 : 45 | Regalite S260 : 45 | Shellflex 451 : 10 | 2,5 - 2,0 |

| Blocs copolymères styréniques linéaires hydrogénés | | | |
|---|---|---|---|
| G1657 : 38 | Regalrez 1076 : 38 | Regalrez 1018 : 24 | 2,5 -2,0 |
| G1652 +G1726X*: 31 | Regalrez 1076 : 31 | Regalrez 1018 : 39 | 2,5 -2,0 |

| | | | |
|---|---|---|---|
| * G1652 : 43 % + G1726 : 57 % | | | |

### EXEMPLE N°5 : Propriétés techniques des liants formulés avec des blocs copolymères styréniques linéaires hydrogénés selon l'invention

Les valeurs des propriétés techniques des liants formulés avec un mélange représentatif des blocs copolymères styréniques linéaires hydrogénés avec les tackifiants, les huiles plastifiantes compatibles et de résines aromatiques sont consignées dans le tableau N°4. Elles montrent clairement que :
- La diminution de la concentration du blocs copolymères conduit aux liants de plus haute pégosité et de tack. Ces liants sont utilisables pour fabriquer des adhésifs pulvérisables repositionnables ;
- L'augmentation de la concentration du bloc copolymères ou de résines aromatiques renforçantes conduit aux liants de plus haute cohésion et de faible tack. Ces liants sont utilisables pour fabriquer des adhésifs pulvérisables de fixation définitive.

**Tableau N°4 :**

| Propriétés techniques des liants formulés avec des blocs copolymères styréniques linéaires hydrogénés selon l'invention. | | | | | | |
|---|---|---|---|---|---|---|
| KRATON G %* | Regalrez 1094 % | Shellflex 451 % | Kristalex F85 % | Pegosité+ Newton | Tack PSTC6 Cm | Cohésion PSTC7 2 Kg heures |
| 50 | 50 | 0 | 0 | | | > 10 |
| 42 | 42 | 16 | 0 | 5 - 6 | 4,O - 3,5 | > 72 |
| 38 | 38 | 24 | 0 | 7 - 8 | 3,5 - 3,0 | > 72 |
| 36,6 | 36,6 | 23,1 | 6,7 | 6 - 7 | 4,0 - 3,5 | > 72 |
| 34 | 34 | 21,4 | 10,6 | 5 - 6 | 6,0 - 7,0 | - |
| 32 | 32 | 20,2 | 15,8 | - | 8,0 - 9,0 | - |
| 35 | 35 | 30 | 0 | 8 - 9 | 3,0 - 2,5 | 15 |
| 33 | 33 | 34 | 0 | 8 - 9 | 2,5 - 2,0 | 10 |
| 31 | 31 | 38 | 0 | 8 - 9 | 2,0 - 1,5 | 5 |

| | | | | | | |
|---|---|---|---|---|---|---|
| * G 1652 : 43 % et G 1726 X : 57 % ; PSTC : Pressure Sensitive Tape Council + avec Polyken taken tester. | | | | | | |

## Revendications

1. Composition de l'adhésif en solution, pulvérisable par pistolet à air comprimé et par aérosol permettant de fabriquer et d'utiliser des adhésifs qui forment un brouillard de particules fines adhérentes et sans filament pendant leur décharge à travers l'orifice d'un système de pulvérisation, caractérisée en ce que l'adhésif est constitué d'un mélange de solvants organiques, liquides et volatiles, de propulseurs écologiques et au moins 3 % en poids d'un liant normalement autocollant, sensible à la pression, élastomère thermoplastique et constitué de :
(a) 20 % à 60 % en poids des blocs copolymères styréniques linéaires et hydrogénés ;
(b) 20 % à 60 % en poids de tackifiants hydrogénés dont les températures de ramollissement sont entre 70°C et 160°C ;
(c) 0,1 % à 40 % en poids d'huiles plastifiantes ou de résines liquides aliphatiques saturées ou de tackifiants hydrogénés liquides à la température ambiante
(d) 0,1 % à 15 % en poids d'antioxydant, d'anti-UV, de promoteur d'adhésion, de charges, de résines aromatiques.

2. Composition selon la revendication 1 caractérisée en ce que le mélange de solvants organiques, liquides est non nocif et constitué d'hydrocarbure aliphatique de C5 à C10, d'hydrocarbure cycloaliphatique, de cétone, d'ester, d'ether et d'hydrocarbure aromatique.

3. Composition selon la revendication 1 caractérisée en ce que les propulseurs écologiques sont sélectionnés parmi le Propane, le Butane, le DiméthylEther, le gaz Carbonique, les Protoxydes d'Azote, les HCFC et HFC.

4. Composition selon la revendication 1 caractérisée en ce que les blocs copolymères styréniques linéaires et hydrogénés sont Styrène Ethylène Butylène Styrène (SEBS) et Styrène Ethylène Propylène Styrène (SEPS), Styrène Ethylène Butylène (SEB) et Styrène Ethylène Propylène (SEP), dont la proportion de Styrène de chaque blocs copolymère styrénique linéaire hydrogéné est de 10 à 40 % en poids.

5. Composition selon la revendication 1 caractérisée en ce que les tackifiants hydrogénés de haute température de ramollissement sont sélectionnés parmi les résines hydrocarbures hydrogénées, les résines aliphatiques, les résines de Dicyclopentadiène hydrogénées, les esters de colophane hydrogénée.

6. Composition selon la revendication 1 caractérisée en ce que les huiles plastifiantes sont sélectionnées parmi les huiles plastifiantes naphténiques, paraffiniques, que les résines liquides aliphatiques saturées sont sélectionnées parmi les poly(iso)butylènes, et que les tackifiants hydrogénés liquides sont sélectionnés parmi les résines hydrocarbures hydrogénées, les esters et les alcools de colophane hydrogénée.

7. Composition selon la revendication 1 caractérisée en ce que les résines aromatiques sont sélectionnées parmi les résines de purs monomères aromatiques commes Alpha-MéthylStyrène, Styrène, VinylToluène ; de résines aromatiques de résidu de distillation du pétrole dont la température de ramollissement est entre 70°C et 160°C ;

8. Composition selon la revendication 1 caractérisée en ce qu'elle est utilisée pour fabriquer des adhésifs repositionnables, de fixation définitive ou temporaire pulvérisables par pistolet à air comprimé et par aérosol et, utilisés dans les industries des arts graphiques, du textile, du cuir et dans les activités de bureau, de décoration et de bricolage.

## Patentansprüche

1. Komposition einer Klebstoff-Lösung, die mit Druckluflpistolen und mit Acrosol-Systeme sprühbar ist, wobei ein Klebematerial erzeugt wird und und benutzt werden kann, welches einen feinen Sprühnebel bildet und während seiner Entladung durch die Düsen-Öffnung des Sprühsystems keine Fäden zieht, und die dadurch charakterisiert ist, dass sich der Klebstoff aus einer Mischung flüssiger, flüchtiger, organischer Lösungsmittel, sowie ökologischer Treibgase und mindestens drei Gewichtsprozenten eines normalerweise selbstklebenden, druckempfindlichen, thermoplastischen Elastomer-Binders zusammengesetzt ist wie folgt:
(a) 20% - 60% Gewichtsprozent hydrierte lineare Styrolblockcopolymere
(b) 20% - 60% Gewichtsprozent hydrierter Klebrigmacher, dessen Erweichungspunkt bei 70°C - 160°C liegt
(c) 0.1%-40% Gewichtsprozent weichmachendes Öl, gesättigte aliphatische flüssige Harze oder bei Raumtemperatur flüssige Klebrigmacher
(d) 0.1%-15% Gewichtsprozent Antioxidans, UV-Absorber, Klebehilfsmittel, Füllstoff, aromatische Harze.

2. Zusammensetzung entsprechend Anspruch 1 ist gekennzeichnet durch die Tatsache, dass das Gemisch von unschädlichen flüssigen organischen Lösunsmitteln aus aliphatischen C5 - C15 Kohlenwasserstoffen, cycloaliphatischen Kohlenwasserstoffen, aus Ketonen, Estern, Äthern und aromatischen Kohlenwasserstoffen besteht.

3. Zusammensetzung entsprechend Anspruch 1 ist gekennzeichnet durch die Tatsache, dass die ökologischen Treibgase gewählt sind aus: Propan, Butan, Dimethyläther, Kohlensäure, (NO)ₓ, HCFC und HFC.

4. Zusammensetzung entsprechend Anspruch 1 ist gekennzeichnet durch die Tatsache, dass die hydrierten linearen Styrolblockcopolymere gewählt sind aus: Styroläthylbutylstyrol (SEBS), Styroläthylpropylstyrol (SEPS), Styroläthylbutan (SEB), und Styroläthylpropan(SEP), in welchen der Gewichtanteil an Styrol jedes hydrierten linearen Styrolblockcopolymers 10% - 40% beträgt.

5. Zusammensetzung entsprechend Anspruch 1 ist gekennzeichnet durch die Tatsache, dass der bei hohen Temperaturen erweichende Klebrigmacher gewählt ist aus: hydrierten Kohlenwasserstoffharzen, aliphatischen Harzen, hydrierten Dicyclopentadienylharzen, Estern und Alkoholen hydrierter Harze.

6. Zusammensetzung entsprechend Anspruch 1 ist gekennzeichnet durch die Tatsache, dass das weichmachende Öl aus cyclo-aliphatischen und paraffinischen weichmachenden Ölen gewählt ist, dass flüssige aliphatische Harze aus Iso-poly-butylene gewählt sind, und dass flüssige hydrierte Klebrigmacher aus den folgenden gewählt sind: hydrierte Kohlenwasserstoffharze, Ester und Alkohole von hydriertem Kolophonium.

7. Zuasammensetzung entsprechend Anspruch 1 ist gekennzeichnet durch die Tatsache, dass die aromatischen Harze aus reinen aromatischen Monomeren gewählt sind, wie zum Beispiel: a-Methylstyrol, Styrol, Vinyltoluol, oder aromatische harzige Rückstände aus der Erdöldestillation, deren Erweichungspunkt zwischen 70°C und 160°C liegt.

8. Zusammensetzung entsprechend Anspruch 1 ist gekennzeichnet durch die Tatsache, dass diese zur Herstellung von repositionierbaren Klebstoffen verwendet wird, für definitive oder temporäre Fixierung, dass sie mit Druckluftpistolen und Aerosols sprühbar ist, und dass sie in der Industrie für graphische Kunst, in der Textil- und in der Leder-Industrie, sowie im Bürobedarf, in der Dekoration und beim Basteln verwendet wird.

## Claims

1. Adhesive solution composition, sprayable with air compressed guns and with aerosol systems, permitting to produce and to use adhesives being capable of discharging from the orifice of the spray systems forming a fine, adherent particle mist and without forming rubbery strings, characterized in that the sprayable adhesive solution composition comprising a volatile liquid organic solvent mixture and ecological propellants containing therein at least 3 % by weight of a normally tacky, pressure sensitive, thermoplastic elastomer binder, said binder comprising :
(a) about 20 % - 60 % by weight of hydrogenated linear styrene block copolymers ;
(b) about 20 % - 60 % by weight of hydrogenated tackifiers whose softening temperatures are about 70° C - 160° C ;
(c) about 0.1 % - 40 % by weight of plasticizer oils, liquid saturated aliphatic resins, hydrogenated tackifiers liquid at room temperature
(d) about 0.1 % - 15 % by weight of Oxygen stabilizers, ultraviolet stabilizers, adhesion promoters, fillers, aromatic resins.

2. The composition of claim 1 wherein the liquid organic solvent mixture comprises aliphatic C5 - C10 hydrocarbons, cycloaliphatic hydrocarbons, keton hydrocarbons, ester hydrocarbons, ether hydrocarbons, aromatic hydrocarbons.

3. The composition of claim 1 wherein the ecological propellants comprise Propane, Butane, DimethylEther, CO2, (NO)x, HCFC, HFC.

4. The composition of claim 1 wherein the hydrogenated linear styrene block copolymers are Styrene Ethylene Butylene Styrene (SEBS), Styrene Ethylene Propylene Styrene (SEPS), Styrene Ethylene Butylene (SEB), Styrene Ethylene Propylene (SEP) whose styrene content of each hydrogenated linear styrene block copolymer is about 10 % - 40 % by weight.

5. The composition of claim 1 wherein the hydrogenated tackifiers with high softening temperatures comprise hydrogenated hydrocarbon resins, aliphatic resins, hydrogenated dicyclopentadiene resins, esters and alcohols of hydrogenated rosins.

6. The composition of claim 1 wherein the plasticizer oils comprise naphtenic and paraffinic plasticizer oils ; the liquid saturated aliphatic resins comprise poly(iso)butylenes ; the liquid hydrogenated tackifiers comprise hydrogenated hydrocarbon resins, esters and alcohols of hydrogenated rosins.

7. The composition of claim 1 wherein the aromatic resins comprise aromatic pur monomer resins such as Alpha MethylStyrene, Styrene, VinylToluene, aromatic resins obtained from the distillations of the petroleum products whose softening temperatures are about 70° C - 160° C.

8. The composition of claim 1 wherein the composition is utilized to fabric repositionnable adhesives, definitive fixation adhesives, temporary adhesives sprayable with air compressed guns and aerosol systems, said adhesives are used in graphic art industries, textile industries, leather industries, office activities, decoration works and do-it yourself works.
